# EUROPÄISCHE PATENTANMELDUNG

(11) **EP 1 959 543 A2**
(43) Veröffentlichungstag der Anmeldung: **20.08.2008**
(21) Anmeldenummer: 08101371.6
(22) Anmeldetag: 07.02.2008
(51) Int. Cl.: H02K 5/14

(54) **Elektromotor mit kommutatorseitigem Rotorlager**

(30) Priorität: 16.02.2007 DE 102007000097
(71) Anmelder: HILTI Aktiengesellschaft, 9494 Schaan (LI)
(72) Erfinder: Burger, Helmut, 82272, Moorenweis (DE); Frenzel, Jens, 86899, Landsberg (DE)
(74) Vertreter: Wildi, Roland

(57) **Zusammenfassung**

Ein Elektromotor (1) mit einem Gehäuse (2) mit einem Stator (3) sowie einem um eine Rotorachse (A) in einem Rotorlager (4) drehbar gelagerten Rotor (5) mit einer Rotorwelle (6) und einem Kommutator (7), wobei dem Stator (3) ein Bürstenträger (8) mit Kohlebürsten (9) drehfest zugeordnet ist und wobei das kommutatorseitige Rotorlager (4) fest mit dem Bürstenträger (8) verbunden ist, welcher schwimmend zum Gehäuse (2) gelagert ist.

## Beschreibung

Die Erfindung bezeichnet einen Elektromotor mit einem kommutatorseitigen Rotorlager, insbesondere zur Verwendung bei zumindest teilweise schlagenden Handwerkzeugmaschinen, wie bspw. Meissel- oder Kombihämmer.

Üblicherweise weisen Elektromotoren (Universalmotoren) einen gehäusefesten Bürstenträger sowie einen gehäusefesten, axial vorgespannten oder kommutatorseitig schwimmend gelagerten Rotor auf.

So ist nach der DE3346697 bei einem Universalmotor einer Handwerkzeugmaschine mit gehäusefestem Bürstenträger die Rotorwelle kommutatorseitig mit einem Nadellager schwimmend in einem Gumminapf gelagert. Dadurch ist auch bei Handwerkzeugmaschinen mit einem aus zwei Schalenhälften gebildeten Gehäuse ein deformationsempfindliches Nadellager zur Lagerung des Rotors verwendbar.

Durch die bei der Verwendung in zumindest teilweise schlagenden Handwerkzeugmaschinen durch das Schlagwerk erzeugten Vibrationen kommt es trägheitsbedingt zu Relativbewegungen zwischen dem auf der Rotorwelle angeordneten Kommutator und dem gehäusefesten Bürstenträger mit den Kohlebürsten, wodurch zwischen diesen ein Schlupf entsteht, der die Leistung und Lebensdauer des Elektromotors vermindert.

Nach der JP2003289641 ist zur Vermeidung eines Schlupfes zwischen dem Kommutator und den Kohlebürsten der Bürstenträger über hülsenförmige Dämpfelemente schwimmend zum Gehäuse gelagert, die Rotorwelle jedoch gehäusefest. Durch die Massenträgheit der Bürstenträgers kommt es bei der Verwendung in zumindest teilweise schlagenden Handwerkzeugmaschinen dennoch zu einem Schlupf.

Die Aufgabe der Erfindung besteht in der Verminderung des Schlupfes zwischen dem Kommutator und den Kohlebürsten bei einem Elektromotor, insbesondere bei der Verwendung in einer zumindest teilweise schlagenden Handwerkzeugmaschine.

Die Aufgabe wird im Wesentlichen durch die Merkmale des Anspruchs 1 gelöst. Vorteilhafte Weiterbildungen ergeben sich aus den Unteransprüchen.

So weist ein Elektromotor mit einem Gehäuse mit einem Stator sowie einem um eine Rotorachse in einem Rotorlager drehbar gelagerten Rotor mit einer Rotorwelle und einem Kommutator, einen dem Stator drehfest zugeordneten Bürstenträger mit Kohlebürsten auf, wobei das kommutatorseitige Rotorlager fest mit dem Bürstenträger verbunden ist, welcher schwimmend zum Gehäuse gelagert ist.

Durch die feste Verbindung des Rotorlagers mit dem Bürstenträger ist ein trägheitsbedingter Schlupf zwischen dem Kommutator und den Kohlebürsten konstruktiv vermieden. Indem der Rotor kommutatorseitig zusammen mit dem Bürstenträger schwimmend zum Gehäuse gelagert ist, werden dennoch Vibrationen des Gehäuses bezüglich des Rotors hinreichend gedämpft.

Vorteilhaft ist das kommutatorseitige Rotorlager in einem schwingungssteifen Lagerblock angeordnet, weiter vorteilhaft aus einer Aluminiumlegierung gefertigt, welcher fest mit dem Bürstenträger verbunden und schwimmend zum Gehäuse gelagert ist, wodurch praktisch keine Relativschwingungen zwischen dem Rotorlager und dem Bürstenträger auftreten.

Vorteilhaft ist der Lagerblock über viskoelastische Dämpfelemente mit dem Gehäuse verbunden, wodurch der Lagerblock elastisch und gedämpft schwimmend zum Gehäuse gelagert ist.

Vorteilhaft sind die Dämpfelemente konisch napfförmig ausgebildet, wobei diese zugeordnete konische Zapfen des Gehäuses in ihrem Innern aufnehmen und selbst im Inneren des Lagerblocks in zugeordneten konischen Ausnehmungen aufgenommen sind, wodurch der sowohl radial als auch axial schwimmend gelagerte Lagerblock axial zum Gehäuse aufsteckbar ist, was eine konstruktiv einfache Montage ermöglicht.

Vorteilhaft weisen die konisch napfförmig ausgebildeten Dämpfelemente an ihrem Napfboden ausgebildete Noppen aus, wodurch die Elastizität in axialer Richtung erhöht wird.

Alternativ vorteilhaft sind die Dämpfelemente hülsenförmig ausgebildet, wobei diese zugeordnete Verschraubungen des Gehäuses in ihrem Innern aufnehmen und selbst im Inneren des Lagerblocks in zugeordneten Ausnehmungen aufgenommen sind, wodurch der sowohl radial als auch axial schwimmend gelagerte Lagerblock axial zum Gehäuse verschraubbar ist, was eine weitere, konstruktiv einfache Montage ermöglicht.

Vorteilhaft weisen die hülsenförmig ausgebildeten Dämpfelemente in ihrem koaxialen Inneren eine Versteifungshülse auf, weiter vorteilhaft aus Metall, wodurch die Verschraubung druckverspannbar ist.

Vorteilhaft ist die Rotorwelle zum Rotorlager axial druckvorgespannt, wodurch trägheitsbedingte Axialschwingungen vermieden werden.

Vorteilhaft ist zwischen dem Lagerblock und einem drehfesten Lagerteil des Rotorlagers ein viskoelastischer O-Ring angeordnet, wodurch die axial druckvorgespannte Rotorwelle axial gedämpft druckvorgespannt ist.

Die Erfindung wird bezüglich zweier vorteilhaften Ausführungsbeispiele näher erläutert mit:
Fig. 1 als Elektromotor in Explosionsdarstellung
Fig. 2 als Einzelheit der Fig. 1 im Längsschnitt
Fig. 3 als Variante eines Elektromotors in Explosionsdarstellung
Fig. 4 als Einzelheit der Fig. 3 im Längsschnitt

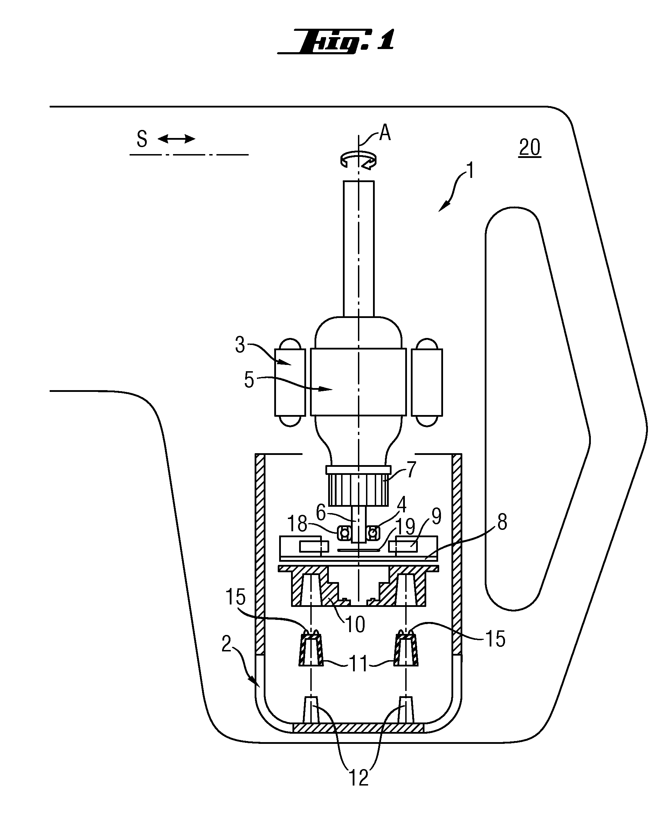

Nach Fig. 1 weist ein bei einer längs einer Schlagachse S schlagenden und dadurch vibrierenden Handwerkzeugmaschine 20 verwendeter, nur teilweise in Explosionsdarstellung dargestellter Elektromotor 1 mit einem Gehäuse 2 mit einem Stator 3 sowie einem um eine Rotorachse A in einem Rotorlager 4 drehbar gelagerten Rotor 5 mit einer Rotorwelle 6 und einem Kommutator 7 auf. Dem Stator 3 ist drehfest ein Bürstenträger 8 mit Kohlebürsten 9 zugeordnet. Das mit dem Bürstenträger 8 fest verbundene kommutatorseitige Rotorlager 4 ist in einem schwingungssteifen Lagerblock 10 aus einer Aluminiumlegierung angeordnet. Der Lagerblock 10 ist über viskoelastische Dämpfelemente 11 gedämpft schwimmend mit dem Gehäuse 2 verbunden. Die Rotorwelle 6 ist zum Rotorlager 4 axial druckvorgespannt, indem zwischen dem Lagerblock 10 und einem drehfesten Lagerteil 18 des Rotorlagers 4 ein viskoelastischer O-Ring 19 angeordnet ist.

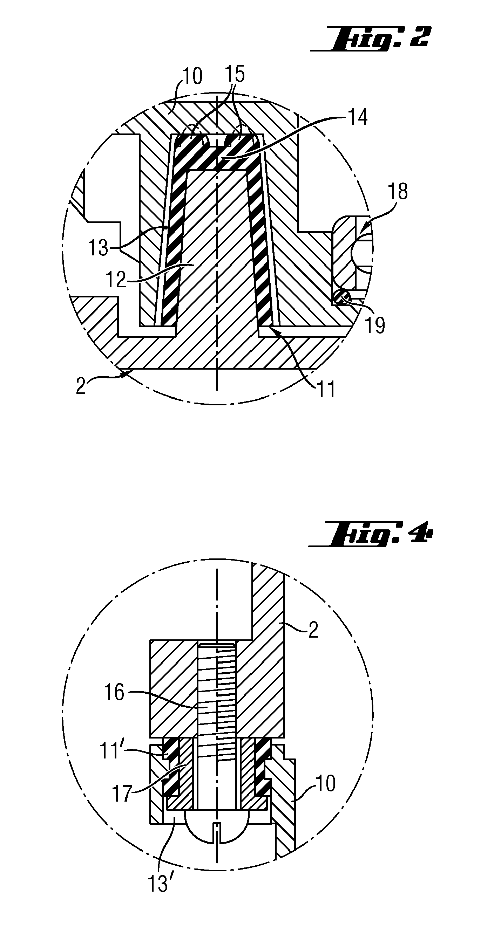

Nach Fig. 2 ist das Dämpfelement 11 konisch napfförmig ausgebildet, wobei dieses einen zugeordneten konischen Zapfen 12 des Gehäuses 2 in seinem Innern aufnimmt und selbst im Inneren des Lagerblocks 10 in einer zugeordneten konischen Ausnehmung 13 aufgenommen ist. Das konisch napfförmig ausgebildete Dämpfelement 11 weist an seinem Napfboden 14 mehrere ausgebildete Noppen 15 auf (undeformiert gestrichelt angedeutet).

Zwischen dem Lagerblock 10 und dem drehfesten Lagerteil 18 ist ein druckverspannter viskoelastischer O-Ring 19 angeordnet.

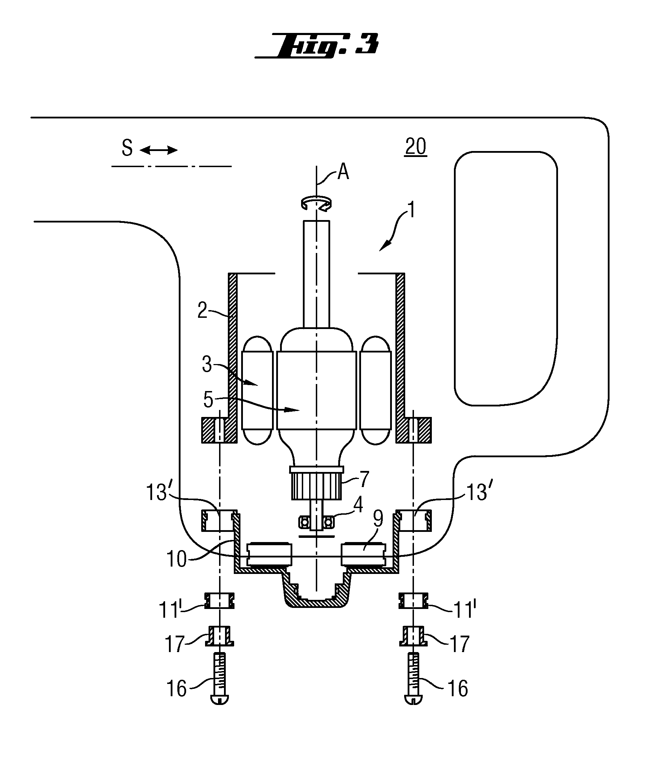

Nach Fig. 3 und Fig. 4 ist das Dämpfelement 11' hülsenförmig ausgebildet, wobei dieses eine zugeordnete Verschraubung 16 des Gehäuses 2 in seinem Innern aufnimmt und selbst im Inneren des Lagerblocks 10 in einer zugeordneten Ausnehmung 13' aufgenommen ist. Das hülsenförmig ausgebildete Dämpfelement 11' weist in seinem koaxialen Inneren eine Versteifungshülse 17 aus Metall auf.

## Patentansprüche

1. Elektromotor mit einem Gehäuse (2) mit einem Stator (3) sowie einem um eine Rotorachse (A) in einem Rotorlager (4) drehbar gelagerten Rotor (5) mit einer Rotorwelle (6) und einem Kommutator (7), wobei dem Stator (3) ein Bürstenträger (8) mit Kohlebürsten (9) drehfest zugeordnet ist, **dadurch gekennzeichnet, dass** das kommutatorseitige Rotorlager (4) fest mit dem Bürstenträger (8) verbunden ist, welcher schwimmend zum Gehäuse (2) gelagert ist.

2. Elektromotor nach Anspruch 1, **dadurch gekennzeichnet, dass** das kommutatorseitige Rotorlager (4) in einem schwingungssteifen Lagerblock (10) angeordnet ist.

3. Elektromotor nach Anspruch 2, **dadurch gekennzeichnet, dass** der Lagerblock (10) über viskoelastische Dämpfelemente (11, 11') mit dem Gehäuse (2) verbunden ist.

4. Elektromotor nach Anspruch 3, **dadurch gekennzeichnet, dass** die Dämpfelemente (11) konisch napfförmig ausgebildet sind, wobei diese zugeordnete konische Zapfen (12) des Gehäuses (2) in ihrem Innern aufnehmen und selbst im Inneren des Lagerblocks (10) in zugeordneten konischen Ausnehmungen (13) aufgenommen sind.

5. Elektromotor nach Anspruch 4, **dadurch gekennzeichnet, dass** die konisch napfförmig ausgebildet Dämpfelemente (11) an ihrem Napfboden (14) ausgebildete Noppen (15) aufweisen.

6. Elektromotor nach Anspruch 3, **dadurch gekennzeichnet, dass** die Dämpfelemente (11') hülsenförmig ausgebildet sind, wobei diese zugeordnete Verschraubungen (16) des Gehäuses (2) in ihrem Innern aufnehmen und selbst im Inneren des Lagerblocks (10) in zugeordneten Ausnehmungen (13') aufgenommen sind.

7. Elektromotor nach Anspruch 6, **dadurch gekennzeichnet, dass** die hülsenförmig ausgebildeten Dämpfelemente (11') in ihrem koaxialen Inneren eine Versteifungshülse (17) aufweisen.

8. Elektromotor nach einem der Ansprüche 1 bis 7, **dadurch gekennzeichnet, dass** die Rotorwelle (6) zum Rotorlager (4) axial druckvorgespannt ist.

9. Elektromotor nach Anspruch 8, **dadurch gekennzeichnet, dass** zwischen dem Lagerblock (10) und einem drehfesten Lagerteil (18) des Rotorlagers (4) ein viskoelastischer O-Ring (19) angeordnet ist.

10. Elektromotor nach einem der Ansprüche 1 bis 9, **gekennzeichnet durch** eine Verwendung in einer zumindest teilweise schlagenden Handwerkzeugmaschine (20).
